## Europäisches Patentamt

## European Patent Office

## Office européen des brevets

(11) Veröffentlichungsnummer: **0 041 669**
A1

(12) **EUROPÄISCHE PATENTANMELDUNG**

(21) Anmeldenummer: 81104153.2

(22) Anmeldetag: 01.06.81

(51) Int. Cl.³: **A 23 L 3/18**
**A 23 C 3/02**

(30) Priorität: 06.06.80 DE 3021266

(43) Veröffentlichungstag der Anmeldung:
16.12.81 Patentblatt 81/50

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt/Main 80(DE)

(72) Erfinder: Bock, Hartmut, Dr.
Behringstrasse 30
D-6233 Kelkheim (Taunus(DE)

(54) Verfahren zur kontinuierlichen Aufbereitung von Nährlösungen durch Erhitzen im Durchlauf.

(57) Die Erfindung betrifft ein Verfahren zur Aufbereitung von Nährlösungen durch kontinuierliches Erhitzen im Durchlauf und eine Vorrichtung zur Durchführung des Verfahrens. Das Erhitzen der Nährlösung erfolgt unter Druck und in einer Stufe. Die erhitzte Nährlösung wird erst an der Stelle der Weiterverarbeitung druckentspannt und gekühlt. Die erfindungsgemäße Vorrichtung besteht aus einem kontinuierlichen Druckerzeuger (1) der über Leitungen in Reihe mit einem Erhitzer (2), einem Verweilgefäß (3) und einer Druckhalte- und Druckentspannungsvorrichtung (5) in einem Verarbeitungsgefäß (6) verbunden ist.

FIG. 1

EP 0 041 669 A1

Croydon Printing Company Ltd.

HOECHST AKTIENGESELLSCHAFT HOE 80/F 113          Dr.EL/jk


Verfahren zur kontinuierlichen Aufbereitung von Nährlösungen durch Erhitzen im Durchlauf


Nährlösungen werden meist in sterilem Zustand eingesetzt.
Beispiele sind industrielle Fermentationen, wo Nährlösungen entweder kontinuierlich oder chargenweise zugegeben
werden, sowie die Nahrungsmittelindustrie etwa bei der
Herstellung von Babykost, wo die Nährlösungen vor dem
Versand sterilisiert werden müssen. In den meisten Fällen
wird ein kontinuierliches Sterilisieren, d. h. im Durchlauf, bevorzugt.


Das Sterilisieren von Nährlösungen erfolgt meist durch
Erhitzen. Am Beispiel von zwei für die Fermentation typischen Nährlösungen wird das bisherige Verfahren geschildert, das auch für andere Anwendungen gilt.


Zuckerlösung ist die einzige Nährlösung, die bislang
standardmäßig im Durchlauf sterilisiert wird. Üblich ist
dabei das Erhitzen im Wärmetauscher. Infolge der von außen
zugeführten Wärme backt der Zucker im Wärmetauscher leicht
an und setzt damit die Leitungen zu. Häufige und damit
kostspielige Wartung ist die Folge. Dies ist insbesondere
bei nicht einwandfreier Druckhaltung der Fall. Wärmetauscher sind außerdem relativ aufwendige Apparaturen.


Konzentrierte Stärkelösung wird bisher in der Vorlage bzw.
im Verarbeitungsgefäß selbst sterilisiert, d. h. im Falle
der Fermentation: Die benötigte Menge an Stärkelösung wird
vor Beginn der Fermentation in den Fermenterkessel eingegeben und dort in zwei Stufen sterilisiert: Bei etwa 75°C
bauen die Stärkemoleküle Wasser ein und vernetzen zu "Pudding". Gibt man jedoch in ausreichender Menge ein geeignetes Enzym hinzu, z. B. Amylase oder Rapidase, und rührt ständig, so werden die Stärkemoleküle soweit gespalten, daß die Lösung flüssig bleibt. Nach einer Verweilzeit von wenigen Minuten bei dieser Temperatur kann nunmehr sterilisiert werden, z. B. bei 120°C. Ein zu frühes Anheben der Temperatur würde die Wirkung des Fermentes abtöten. Nach dem Sterilisieren wird abgekühlt und die dann kalte und sterile Nährlösung mit Pilzgut geimpft. Bei diesem Vorgehen besteht die Gefahr, daß wegen der großen Menge an von vornherein vorhandener Nährlösung die Pilze unkontrolliert und meist zu schnell wachsen und damit keine optimale Produktion von Antibiotika erzielt wird.

Abweichend hierzu wird im Einzelfall verdünnte Stärkelösung (maximal 15 Gew.%) auch im Durchlauf erhitzt. Die Temperaturführung geschieht hierbei, wie oben beschrieben, in zwei Stufen und unter Zusatz eines Enzyms. Bei der ersten Stufe ist auch schon das Einleiten von Sattdampf unter Druck eingesetzt worden. Derartig verdünnte Lösungen eignen sich jedoch nicht zur Nachgabe in einen Fermenter, da sie durch ihren großen Wasseranteil die Kulturlösung für die Pilze zu sehr verdünnen. Auch in der Nahrungsmittelindustrie, z. B. bei Babykost, muß nach dem Sterilisieren eine konzentrierte Lösung vorliegen. Auch hier wird ein Durchlaufverfahren (kontinuierliches Verfahren) wegen seiner Flexibilität bevorzugt. Konzentrierte Stärkelösungen (>15 Gew.%) konnt jedoch bisher für keine Anwendung im Durchlauf sterilisiert werden. In Fachkreisen wurde ein solches Verfahren auch stets für schwierig, wenn nicht gar für aussichtslos in der Realisierung, gehalten.

Es ist inzwischen gelungen, mit ein bzw. - für Stärkelösung unter gleichzeitigem Einsatz eines Enzyms - mit zwei aufeinanderfolgenden Direktdampferhitzern, d. h. unter Einleiten von Sattdampf in die Nährlösung unter Druck und nachfolgender Kühlung, konzentrierte Nährlösungen jeder Art bis 50 % oder mehr im Durchlauf zu sterilisieren. Die dabei verwendete Vorrichtung ist wegen der für Stärkelösung erforderlichen zweiten Stufe und der nachfolgenden Kühleinrichtung (z. B. Wärmetauscher) relativ aufwendig. Auch der bei Stärke benötigte Einsatz eines Enzyms in der ersten Stufe ist kostenintensiv und in vielen Fällen wegen der bewirkten chemischen Umwandlung unerwünscht.

Aufgabe der Erfindung war es, die vorgenannten Nachteile zu überwinden und ein Verfahren der eingangs beschriebenen Art so zu verbessern, daß im kontinuierlichen Durchlauf Nährlösungen hoher Konzentration, vor allem auch Stärkelösung, vor der Weiterverarbeitung, z. B. der Eingabe in einen laufenden Fermentationsprozeß, in einer Stufe sterilisiert werden können ohne Verwendung eines Enzyms und ohne Verkleben oder Verstopfen der Leitung durch die Nährlösung.

Diese Aufgabe wird erfindungsgemäß gelöst dadurch, daß die Nährlösung eine Konzentration von vorzugsweise mindestens 30 Gew.% hat, wobei die Nährlösung auch eine Lösung von Stärke in Wasser sein kann, und daß das Erhitzen der Nährlösung unter Druck und in einer Stufe geschieht, und daß die erhitzte Nährlösung erst an der Stelle der Weiterverarbeitung druckentspannt und gekühlt wird.

Das erfindungsgemäße Verfahren wird in einer Vorrichtung durchgeführt, die dadurch gekennzeichnet ist, daß ein kontinuierlicher Druckerzeuger über Leitungen in Reihe mit einem Erhitzer, einem Verweilgefäß, welches das Halten einer vorgegebenen Temperatur ermöglicht, und mit einer Druckhalte- und Druckentspannungsvorrichtung in einem Verarbeitungsgefäß verbunden ist.

Nach dem erfindungsgemäßen Verfahren und mit der erfindungsgemäßen Vorrichtung lassen sich die verschiedensten Nährlösungen bis zu Konzentrationen von 50 % und darüber durch kontinuierliches Erhitzen aufbereiten, vorzugsweise sterilisieren. Als Nährlösungen, die erfindungsgemäß aufbereitet werden können, kommen in Frage Nährlösungen für Pilzkulturen, z. B. in Fermentationen, die die verschiedensten Zucker, Dextrine und Stärkearten enthalten, ferner Nährmittellösungen für Mensch und Tier, die in hohen Konzentrationen auch pastös sein können, z. B. Babykost.

Im folgenden werden das erfindungsgemäße Verfahren und die Vorrichtung zu seiner Durchführung beispielhaft für eine zweckmäßige Ausführungsform näher beschrieben.

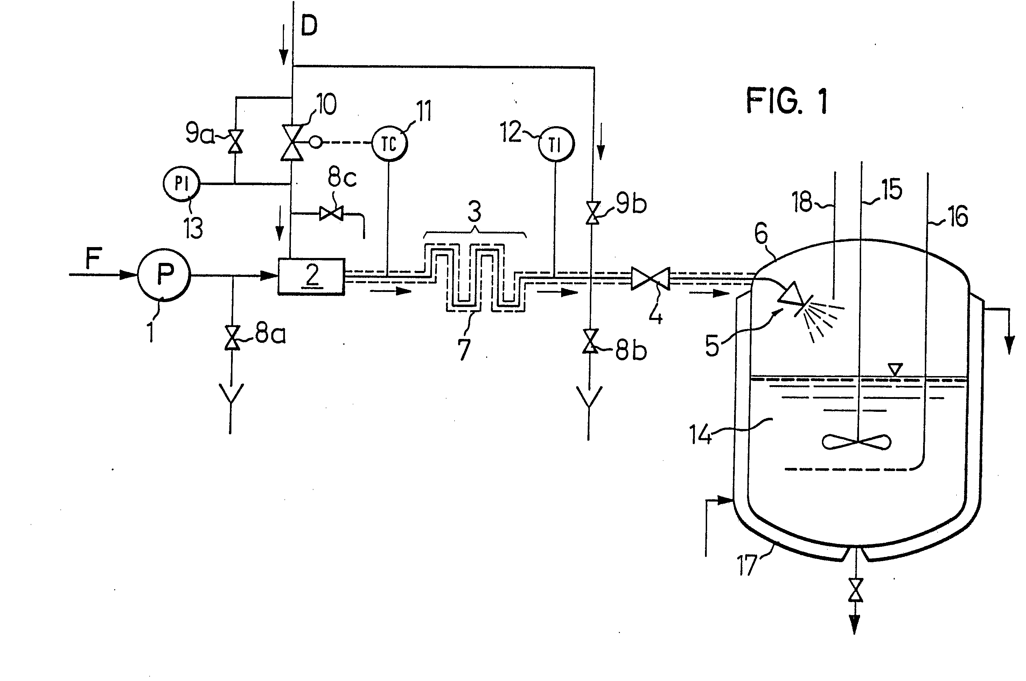

Figur 1 zeigt das Fließschema für eine erfindungsgemäße Anlage mit Direktdampferhitzer.

Figur 2 zeigt den Querschnitt durch einen Direktdampferhitzer für das Einleiten von Sattdampf in eine Nährlösung unter Druck.

Im einzelnen bedeuten:

1 Pumpe (Druckerzeuger)
2 Erhitzer (Erwärmer)
3 Verweilgefäß
4 Absperrorgan (Hahn, Ventil)
5 Sprühdüse (Druckhalte- und Druckentspannungsvorrichtung)
6 Fermenter (Gefäß zur Weiterverarbeitung)
7 Begleitheizung
8 a, b, c Absperrorgan (Hahn, Ventil)
9 a, b Absperrorgan (Hahn, Ventil)
10 Regelventil
11 Temperaturmeß- und -regel-Einrichtung
12 Temperaturmeßgerät

0041669

- 5 -

13     Druckmeßgerät

14     Kulturlösung

15     Rührer

16     Einlaß zum Belüften der Kulturlösung

17     Heiz- bzw. Kühlmantel

18     Zugaberohr(e) für Pilzkulturlösung und ggf. Hilfsmittel

D     Dampf

F     zu erhitzende Flüssigkeit (Wasser, Nährlösung)

19a     kalte Nährlösung

19b     heiße Nährlösung

20     Mischdüse

21     Dampfeinlaßkanäle in die Mischdüse (20)

22     Mischkanal in der Mischdüse (20)

23     Dichtungsring

24     Dampfvorkammer

Die Pumpe (1) (kontinuierlicher Druckerzeuger) ist über Leitungen in Reihe mit dem Erhitzer (2), dem Verweilgefäß (3), dem Absperrorgan (4) (Hahn, Ventil) und der Sprühdüse (Druckhalte- und Druckentspannungsvorrichtung) (5) verbunden.

Die Pumpe (1) dient zum Einspeisen der Nährlösung in den Erhitzer (2) und zum Erzeugen eines Druckes in diesem und den nachfolgenden Anlagenteilen bis zur Sprühdüse (5). Der Pumpentyp wird am besten so gewählt, daß ein gleichmäßiger Druck entsteht. Bei Verwendung einer Kolbenpumpe ist es also zweckmäßig, den Einbau eines Druckausgleichsgefäßes, z. B. eines Windkessels, vorzusehen.

Im Erhitzer (2) wird die Nährlösung erhitzt. Dargestellt ist die bevorzugte Ausführungsform der Erwärmung mittels eines Direktdampferhitzers, in dem Sattdampf in die den Erhitzer durchströmende Nährlösung unter Druck eingeleitet wird. Die Menge des Dampfes wird so gewählt, daß die Temperatur der Nährlösung am Ausgang des Erhitzers (2) dem gewünschten Wert entspricht.

Dies wird durch einen Temperaturregelkreis erzielt. Dieser besteht aus dem Dampfregelventil (10) und der Temperaturmeß- und -regel-Einrichtung (11). Durch Einstellen des Sollwertes der Temperaturregeleinrichtung läßt sich die Temperatur nach dem Ausgang des Erhitzers frei wählen, z. B. 120 oder 140°C.

Bei der geschilderten Erwärmung der Nährlösung mittels Sattdampf nimmt jene entsprechend dem Dampfverbrauch zum Erwärmen eine bestimmte Menge Kondensatwasser auf. Bei Erwärmung von z. B. 20 auf 120°C liegt diese Menge je nach der Güte der Wärmeisolierung der Anlage bei etwa 15 bis 20 %, bezogen auf das Gewicht der erwärmten Nährlösung. Diese geringe Verdünnung stört nicht.

Zum Erwärmen der Nährlösung können selbstverständlich auch ein Wärmetauscher, der beispielsweise mit Dampf oder einer Wärmeträgerflüssigkeit betrieben wird, oder andere indirekte oder direkte Heizmethoden verwendet werden.

Nach Verlassen des Erhitzers (2) durchströmt die erwärmte Nährlösung das Verweilgefäß (3). Im einfachsten Fall ist dies - häufig ausreichend - ein einfaches Rohr. Ein Rührer ist nicht erforderlich. Die Abmessungen des Verweilgefäßes bestimmen die Verweilzeit der Nährlösung und damit die Dauer des Sterilisierens (beispielsweise 3 Minuten bei 140°C. Nach dem Ausgang des Verweilgefäßes (3) kann zur Kontrolle noch ein Temperaturmeßgerät (12) vorgesehen sein. Zur Druckkontrolle dient das gegebenenfalls vorgesehene Druckmeßgerät (13). Das Verweilgefäß ist zweckmäßigerweise austauschbar angeordnet, um verschiedene Verweilzeiten zu erzielen bzw. um bei verschiedenen Durchflüssen etwa die gleiche Verweilzeit zu erhalten.

Nach Passieren des Absperrorgans (4) gelangt die sterilisierte Nährlösung zur Sprühdüse (5). Mit deren Hilfe wird einerseits der Druck abgebaut und anderseits die Nährlösung in Form feiner Tröpfchen versprüht. Geschieht dieses Versprühen in den Fermenter (6) hinein, so dient es einerseits dem schnellen Anpassen der Temperatur der Nährlösung an die Temperatur der Kulturlösung (14) im Fermenter (6) (Abkühlen), so daß das Pilzgut in der Kulturlösung nicht durch Übertemperatur geschädigt werden kann. Andererseits wird hiermit durch die Feinverteilung in Tröpfchen erreicht, daß die im Falle von Stärkelösung nunmehr in diesen Tröpfchen erstarrende Nährlösung in ausreichend feinen Partikeln in der Kulturlösung vorliegt, um von dem Pilzgut angenommen werden zu können. Es wird das Entstehen von für das Pilzgut unverdaubar großen Brocken vermieden.

Der Fermenter (6) ist zweckmäßigerweise mit einem Heiz-bzw. Kühlmantel (17), einem Rührer (15), einem Einlaß zum Belüften der Kulturlösung (16) und einem oder mehreren Zugaberohren für Pilzkulturlösung und gegebenenfalls Hilfsmittel (18) versehen, und er ist mit der Kulturlösung (14) beschickt.

In anderen Fällen, z. B. beim sterilen Abfüllen in Nährmittelgläser, genügt an Stelle der Sprühdüse (5) eine einfache Druckerniedrigungseinrichtung, z. B. ein mechanisches Druckhalteventil. Auch die vorher beschriebene Sprühdüse kann zweckmäßigerweise als Druckhalteeinrichtung ausgebildet sein. Ferner ist es auch möglich, die Sprühdüse mit Handeinstellung oder automatischer Einstellung ihrer Öffnung auszubilden, die jeweils passend zum Durchfluß den gewünschten Druck herstellt.

Beim Anfahren der erfindungsgemäßen Vorrichtung wird zweckmäßigerweise zunächst die gesamte Anlage selbst sterilisiert, z. B. wie folgt:

Dampf wird durch das Ventil (9b) in die Anlage eingeleitet. Dieser strömt einerseits durch den Hahn (4) und die Druckentspannungseinrichtung (5) und andererseits durch den Hahn (8b), sowie das Verweilgefäß (3), den Erhitzer (2) und die Hähne (8a) und (8c). Nach ausreichendem Sterilisieren (in Abhängigkeit von der Temperatur und der Dauer) wird das Regelventil (10) in Handstellung entsprechend der später zu erwartenden Öffnung ungefähr eingestellt. Falls erforderlich, kann in dieser Zeitphase auch der Hahn (9a) zusätzlich geöffnet sein. Die Hähne (8a) und (8c) und danach (8b) und (9b) werden nun geschlossen. Die Druckhalte- und Durckentspannungseinrichtung (5) sorgt für die Einstellung des Betriebsdruckes. Nach dem Schließen der Hähne (8a), (8b), (8c), (9a) und (9b) wird die Pumpe (1) eingeschaltet und mittels dieser zunächst Wasser (F = Wasser) durch die Anlage gefördert und dabei sterilisiert. Gleichzeitig kann die Temperaturmeß- und -regel-Einrichtung (11) auf Automatik geschaltet werden. Nach Stabilisierung von Druck und Temperatur kann gegebenenfalls die Fördergeschwindigkeit der Pumpe (1) noch korrigiert werden, bevor auf die zu sterilisierende Nährlösung (F = Nährlösung) umgeschaltet wird.

Das Wasser vom Anfahrvorgang wird bereits über die Sprühdüse (5) in den Fermenter (6) versprüht. Es kann aber auch, ebenso die Nährlösung, im sogenannten Stand-by-Betrieb über den Hahn (8b) bei geschlossenem Hahn (4) am Verarbeitungsgefäß (6) zunächst vorbeigeleitet werden.

Abhängig von der Fördergeschwindigkeit ist es erforderlich, den Erhitzer (2) und vor allem die folgenden Teile (Leitungen, Verweilgefäß (3) und Hahn (4)) mehr oder weniger gut gegen Wärmeverluste zu isolieren oder sogar gegebenenfalls mit einer Begleitheizung (7) auszurüsten. Diese dient der Temperaturhaltung, d. h. der Kompensation der Wärmeverluste im Teil der Anlage vom Ausgang des Erhitzers (2) über das Verweilgefäß (3), den Hahn (4) bis zur Druckhaltungs- und Druckentspannungseinrichtung (5). Sie wird aber nur benötigt, falls bei kleiner Fördergeschwindigkeit die Temperatur der Nährlösung unter die Sterilisiertemperatur abzusinken droht. Die Begleitheizung (7) wird gegebenenfalls bereits beim Anfahren der Anlage eingeschaltet. In den meisten Fällen wird aber eine passende Wärmeisolierung ausreichen.

Der Druck während des kontinuierlichen Erwärmens der Nährlösung im Durchlauf beträgt zweckmäßigerweise mindestens 3 bar, vorzugsweise 4 bis 12 bar.

Beim Abstellen der Anlage wird zunächst zum Zwecke des Spülens wieder auf Wasser umgeschaltet. Nach genügender Reinigungszeit werden die Pumpe (1) und die Dampfzufuhr abgestellt und gegebenenfalls mindestens einer der Hähne (8a), (8b), oder (8c) zur Druckentspannung der Anlage geöffnet.

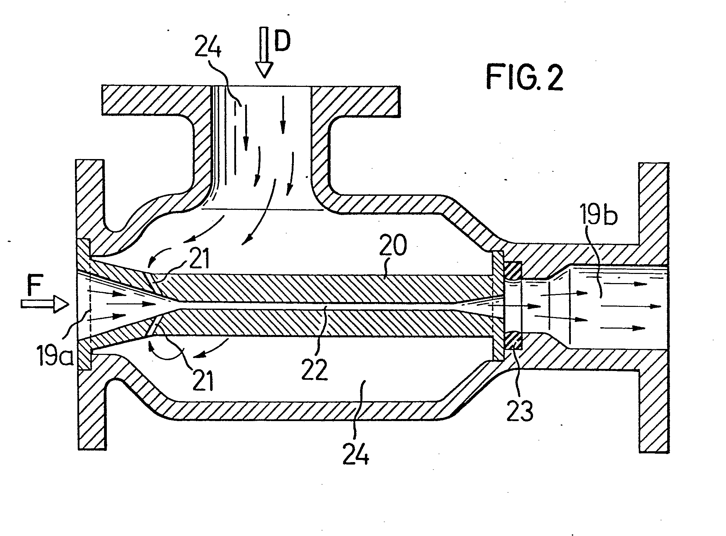

Figur 2 zeigt im Längsschnitt eine bevorzugte Ausführungsform eines Erhitzers, nämlich eines Direktdampferhitzers.

Die kalte Nährlösung (19a) wird unter Druck in einem engen Kanal (22) mit Sattdampf zwangsgemischt, der dabei kondensiert. Die den engen Kanal (22) enthaltende Mischdüse (20) hat an ihrem Eingang einen oder mehrere Einlässe (21) für Wasserdampf. Durchmesser und Länge des engen Kanals (22) und der Einlässe (21) müssen an den Durchsatz der Nährlösung angepaßt sein. Dieser kann minimal etwa 10 Liter pro Stunde betragen und ist bei geeigneter Wahl der Mischdüse nach oben an jeden technisch in Frage kommenden Bedarf anpaßbar. Am Ausgang der Mischdüse (20) tritt die erwärmte Nährlösung (19b) aus dem Direktdampferhitzer aus. Die Mischdüse (20) ist vorzugsweise austauschbar ausgebildet.

Sie kann leicht gereinigt werden. Eine Dichtung (23) dichtet den Dampfraum (24) von der Nährlösung ab. Bei konstantem Druck der Nährlösung tritt keine Nährlösung in den Dampfraum (24) durch die Öffnungen (21) ein. Eine Gefahr hierfür besteht nur bei Druckstößen, z. B. bei Verwendung einer Kolbenpumpe ohne Windkessel als Druckerzeuger (1).

Mit dem erfindungsgemäßen Verfahren wird eine Reihe von Vorteilen erzielt: In einer einstufigen und damit kostengünstigen Apparatur können Nährlösungen aller Art - auch Stärkelösungen - bis zu Konzentrationen von 50 % und höher im Durchlauf sterilisiert werden. Die kostenintensive Kühleinrichtung vor der Weiterverarbeitung entfällt. Es wird bei Stärkelösung kein Enzym zur Vorbereitung der Sterilisation benötigt. Die Gefahr des Anbackens der Nährlösung ist wesentlich verringert. Durchflußänderungen während des kontinuierlichen Betriebes sind schnell und problemlos möglich. Bei Verwendung eines Direktdampferhitzers wird außerdem Energie gespart, weil die benötigte Energiemenge bis auf geringe Wärmeverluste nach außen dem theoretischen thermodynamischen Wert entspricht. Schließlich ist die erfindungsgemäße Vorrichtung wartungsfreundlich.

PATENTANSPRÜCHE

1. Verfahren zur Aufbereitung von Nährlösungen durch kontinuierliches Erhitzen im Durchlauf, dadurch gekennzeichnet, daß die Nährlösung eine Konzentration von vorzugsweise mindestens 30 Gew.% hat, daß das Erhitzen unter Druck und in einer Stufe erfolgt, und daß die erhitzte Nährlösung erst an der Stelle der Weiterverarbeitung druckentspannt und gekühlt wird.

2. Verfahren nach Anspruch 1, dadurch gekennzeichnet, daß die Nährlösung eine Lösung von Stärke in Wasser ist.

3. Verfahren nach Anspruch 1 und 2, dadurch gekennzeichnet, daß das Erhitzen durch Direkteinspeisung von Wasserdampf in die Nährlösung erfolgt.

4. Verfahren nach einem der Ansprüche 1 bis 3, dadurch gekennzeichnet, daß das Erhitzen der Nährlösung zu ihrer Sterilisierung erfolgt.

5. Verfahren nach einem oder mehreren der Ansprüche 1 bis 4, dadurch gekennzeichnet, daß die Druckentspannung durch Versprühen erfolgt.

6. Verfahren nach einem oder mehreren der Ansprüche 1 bis 5, dadurch gekennzeichnet, daß die Nährlösung nach dem Erhitzen während der Weiterleitung bis zur Stelle der Weiterverarbeitung von außen beheizt wird.

7. Verfahren nach einem oder mehreren der Ansprüche 1 bis 6, dadurch gekennzeichnet, daß die Nährlösung kontinuierlich in einen laufenden Fermenter eingespeist wird.

8. Verfahren nach einem der Ansprüche 1 bis 7, dadurch gekennzeichnet, daß der Druck während des Erhitzens bis zur Druckentspannung vor der Weiterverarbeitung konstant gehalten wird und mindestens 3 bar beträgt, vorzugsweise 4 bis 12 bar.

9. Verfahren nach einem der Ansprüche 1 bis 8, dadurch gekennzeichnet, daß zeitlich vor und nach dem kontinuierlichen Erhitzen der Nährlösung im Durchlauf ein kontinuierliches Erhitzen von Wasser im Durchlauf erfolgt.

10. Vorrichtung zur Durchführung des Verfahrens nach Ansprüchen 1 bis 9, dadurch gekennzeichnet, daß ein kontinuierlicher Druckerzeuger über Leitungen in Reihe mit einem Erhitzer und einem Verweilgefäß, welches das Halten einer vorgegebenen Temperatur ermöglicht und mit einer Druckhalte- und Druckentspannungsvorrichtung in einem Verarbeitungsgefäß verbunden ist.

11. Vorrichtung nach Anspruch 10, dadurch gekennzeichnet, daß der Erhitzer ein Wärmetauscher ist.

12. Vorrichtung nach Anspruch 10, dadurch gekennzeichnet, daß der Erhitzer eine Vorrichtung zum Einleiten von Sattdampf unter Druck in die Nährlösung ist.

13. Vorrichtung nach Anspruch 12, dadurch gekennzeichnet, daß die Vorrichtung zum Einleiten von Sattdampf mit einer auswechselbaren Mischdüse ausgestattet ist.

14. Vorrichtung nach einem der Ansprüche 10 bis 13, dadurch gekennzeichnet, daß die Leitung vom Erhitzer bis zur Druckentspannungsvorrichtung wärmeisoliert und/oder von außen mit einer Heizeinrichtung beheizbar ist.

15. Vorrichtung nach einem der Ansprüche 12 oder 13, dadurch gekennzeichnet, daß am Ausgang des Erhitzers eine Temperaturmeßeinrichtung angebracht ist, die ein Regelventil in der Dampfzuleitung des Erhitzers in Abhängigkeit von der Temperatur der erhitzten Nährlösung steuert.

16. Vorrichtung nach einem der Ansprüche 10 bis 15, dadurch gekennzeichnet, daß das Verweilgefäß austauschbar angeordnet ist.

17. Vorrichtung nach einem der Ansprüche 10 bis 16, dadurch gekennzeichnet, daß die Druckhalte- und Druckentspannunsvorrichtung als Düse oder Sprühdüse ausgebildet ist.

FIG. 1

1/2

0041669

FIG.2

**Europäisches Patentamt**

# EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - A - 2 303 890 (STE DES PRODUITS NESTLE S.A.) <br> * Ansprüche 1 bis 8, 11, 14, 20; Seite 7, Absatz 4 bis Seite 9, Absatz 2; Seite 12, Beispiel 1; Seite 14, Beispiel 2; Fig. * <br> & CH - A - 566 726 <br> & AT - B - 339 125 <br> & GB - A - 1 347 415 <br> --- | 1,3,4, 11 | A 23 L 3/18 <br><br> A 23 C 3/02 |
| | DE - A1 - 2 758 707 (STORK AMSTERDAM B.V.) <br> * Ansprüche 1 und 3; Seite 8, Absatz 5, bis Seite 9, Absatz 2; Fig. 1 * <br> --- | 1,3,4, 11 | **RECHERCHIERTE SACHGEBIETE (Int. Cl.³)** <br><br> A 23 C 3/00 <br> A 23 L 3/00 |
| | DE - A - 1 792 510 (SCHRÖDER & CO.) <br> * Anspruch 1; Seite 2, Absatz 2 bis Seite 3, Absatz 1; Seite 4, Absatz 4 bis Seite 5, Absatz 1 * <br> & GB - A - 1 253 905 <br> --- | 1 | |
| A | DE - B2 - 1 963 688 (HABRA-WERK et al.) <br> --- | | **KATEGORIE DER GENANNTEN DOKUMENTE** |
| A,P | DE - A1 - 2 946 326 (STE DES PRODUITS NESTLE S.A.) <br> ---- | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Berlin | 15-07-1981 | SCHULTZE |

EPA form 1503.1 06.78